# EUROPEAN PATENT SPECIFICATION

(11) **EP 2 915 986 B1**
(45) Date of publication and mention of the grant of the patent: **08.05.2019**
(21) Application number: 14158273.4
(22) Date of filing: 07.03.2014
(51) Int. Cl.: F02D 41/22, F02D 19/06, F02D 41/00, F02D 19/10

(54) **Evaluating air-tightness of a gaseous fuel manifold during purge gas flushing**
Luftdichtheitsbeurteilung eines Verteilers für gasförmigen Brennstoff während des Spülgasspülens
Évaluation de l'étanchéité à l'air d'un collecteur de carburant gazeux lors du passage de gaz de purge

(43) Date of publication of application: 09.09.2015
(73) Proprietor: Caterpillar Motoren GmbH & Co. KG, 24159 Kiel (DE)
(72) Inventor: SIXEL, Eike Joachim, 24109 Kiel (DE); MARSCHEIDER, Hannes, 24790 Schülldorf (DE); TUEXEN, Thorsten, 24214 Gettorf (DE); HOHENWALD, Christian, 24161 Altenholz (DE); WESTER, Daniel, 24242 Felde (DE); SIVASUBRAMANIAN, Arvind, Peoria, Illinois 61615 (US); STUBBS, Adam, Eye, Peterborough PE6 7PY (GB)
(74) Representative: BRP Renaud & Partner mbB Rechtsanwälte Patentanwälte Steuerberater

(56) References cited:
- WO-A1-99/32775
- DE-A1- 10 215 906
- US-B1- 6 467 466

## Description

### Technical Field

The present disclosure generally relates to dual fuel internal combustion engines, and more particularly to switching to operating a dual fuel internal combustion engine with gaseous fuel.

### Background

A dual fuel (DF) internal combustion engine can typically operate in a liquid fuel mode (LFM) and in a gaseous fuel mode (GFM). An exemplary DF internal combustion engine is disclosed, for example, in European Patent Application No. 13 174 377.5 by Caterpillar Motoren GmbH & Co. KG, GERMANY, filed on 28 June 2013. In LFM, a liquid fuel, such as Diesel fuel or heavy fuel oil (HFO), is provided as the sole source of energy during combustion via a main liquid fuel injector. In GFM, a gaseous fuel such as natural gas is provided, for example mixed with air in an intake port of a cylinder. Ignition of the gaseous fuel may be performed with a small amount of liquid fuel that is, for example, injected directly into the cylinder via the same main fuel liquid injector or a separate ignition fuel injector.

In DF internal combustion engines, for each cylinder at least one gaseous fuel admission valve, herein also referred to as gas admission valve (GAV) may be positioned between a source of gaseous fuel and an air intake of the engine. When a GAV is opened in GFM, the gaseous fuel passes into the air intake for mixing with the intake air. An example of a solenoid actuated gaseous fuel admission valve is disclosed in European Patent 1 040 264 B1. Solenoid actuated GAVs include a solenoid coil, a movable plate, and stationary plate or disc, whereby a current delivered to the solenoid coil actuates the valve by lifting the movable plate from the stationary plate.

Due to their positioning close to the combustion chamber, GAVs may be susceptible to contamination and increased wear. For example, during operation in LFM, the movable plate of a solenoid actuated GAV may dither on the stationary plate or disc of the closed gaseous fuel admission valve due to the combustion. Thereby, both movable plate and stationary plate or disc may be exposed to an increased wear. Furthermore, GAV may not only open in GFM but may also open during LFM. For example in case of a solenoid actuated GAV, a pressure difference between intake air and the gaseous fuel pipe system (for example being at ambient pressure during LFM) may result in opening. Then, small particulates may get into the gaseous fuel piping and later-on trapped in the valve, for example, between the movable plate and the stationary plate or the seat of the solenoid actuated GAV and the valve may no longer close properly. Wear as well as contamination of the GAV may result in leakage through even a closed GAV or an increased pass rate through an opened GAV during GFM. It is further referred to DE 102 15 906 A1 disclosing a monitoring of a supply valve of an internal combustion engine. Furthermore, it is referred to US 6,467,466 B1 disclosing a gas leakage detection and fail-safe control method for gas-fueled internal combustion engines.

The present disclosure is directed, at least in part, to improving or overcoming one or more aspects of prior systems.

### Summary of the Disclosure

In a first aspect, a method of evaluating air-tightness of a gaseous fuel manifold of a dual fuel internal combustion engine with a plurality of cylinders and at least one gaseous fuel admission valve for each cylinder of the plurality of cylinders fluidly delimiting the gaseous fuel manifold with respect to the respective cylinder is disclosed. The method comprises flushing and/or pressurizing the gaseous fuel manifold with a purge gas at a pressure above an intake manifold air pressure thereby setting a differential gas pressure across gaseous fuel admission valves, measuring a pressure associated with the flushing and/or the pressurizing, thereby generating pressure data, and evaluating the air-tightness of a gaseous fuel manifold based on the measured pressure data.

In another aspect, a method of controlling an initialization process for setting the starting conditions for adding gaseous fuel for switching to gaseous fuel operation of a dual fuel internal combustion engine comprising a plurality of cylinders and at least one gaseous fuel admission valve for each cylinder of the plurality of cylinders comprises performing the above cited method of evaluating air-tightness, and aborting the initialization process as soon as the evaluation of the evaluating air-tightness of the gaseous fuel manifold based on the measured pressure value indicates insufficient air-tightness.

In another aspect, a dual fuel internal combustion engine comprises a liquid fuel system, a gaseous fuel system including a gaseous fuel manifold, a plurality of cylinders, respectively connected to the gaseous fuel manifold, a gaseous fuel admission valve for each cylinder of the plurality of cylinders, fluidly connecting the gaseous fuel manifold with the respective cylinder, at least one purge gas supply valve for flushing and/or pressurizing the gaseous fuel manifold, a sensor unit for measuring pressure data associated with flushing and/or pressurizing the gaseous fuel manifold, and a control unit configured to perform any one of the above cited methods.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary DF internal combustion engine operable inter alia partly on gaseous fuel;
Fig. 2 shows a schematic cross-sectional view of a cylinder of a DF internal combustion engine;
Fig. 3 shows a flow diagram of an exemplary switching process from a liquid fuel operation to a gaseous fuel operation of a DF internal combustion engine using inter alia an exemplary method of evaluating air-tightness of the gaseous fuel manifold; and
Fig. 4 shows an exemplary time-pressure diagram illustrating the pressure evaluation.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

As indicated above, GAVs of DF internal combustion engines may become contaminated or worn out. Contamination may be caused as the GAVs may not only open in GFM but also during LFM. For example in case of a solenoid actuated GAV, a pressure difference between intake air and the gaseous fuel pipe system during LFM may result in opening. Then, small particulates may get accumulated upstream of the GAV and later-on trapped in the valve, for example, between the movable plate and the stationary plate or the seat of the solenoid actuated GAV and the valve may no longer close properly. Similarly, during operation in LFM, particulates can accumulate close to the GAV at the intake air side. Then, if the DF internal combustion engine switches from LFM to GFM, the GAV will open in a first step of the transition (for example still at 100 % of power provided by liquid fuel) and those particulates may be pulled into the valve, resulting potentially again in improperly closing due to, for example, the dirt being stuck between the plates.

The present disclosure may be based in part on the realization that not properly operating GAVs may lead to a sudden and massive overfilling of the respective cylinder with gaseous fuel when enabling GFM. This may result in severe damage to the engine. Thus, it was realized that evaluating the operability of GAVs prior and during switching to GFM may allow avoiding operation with one or more malfunctioning GAVs.

The present disclosure may further be based in part on the realization that evaluating the operability of GAVs before enabling the gaseous fuel supply system may be done during the flushing of the gaseous fuel system or sections therefrom with a purge gas. Flushing may be performed by supplying the purge gas at one end (generally referred to as supply side) and discharge the same at another end (generally referred to as discharge side). Specifically, a malfunctioning GAV will leak the purge gas, for example nitrogen, out of the gaseous fuel system into the corresponding cylinder, or the respective intake air system (e.g. inlet air manifold). Thus, it was realized that leakage will affect the pressure behavior of the flushing process. The process may comprise time periods during which a through flow of purge gas takes place (flushing) and/or sections of airtight time periods during which purge gas is not supplied or discharged (pressurizing). The evaluation may be based on the pressure being observed, for example, at the supply side, the discharge side, and/or within the observed volume. Moreover, the evaluation may be based on the flow rate during flushing.

The leakage may result in a reduced pressure and/or flow rate at the discharge side, a modified temporal behavior of a pressure drop or similar.

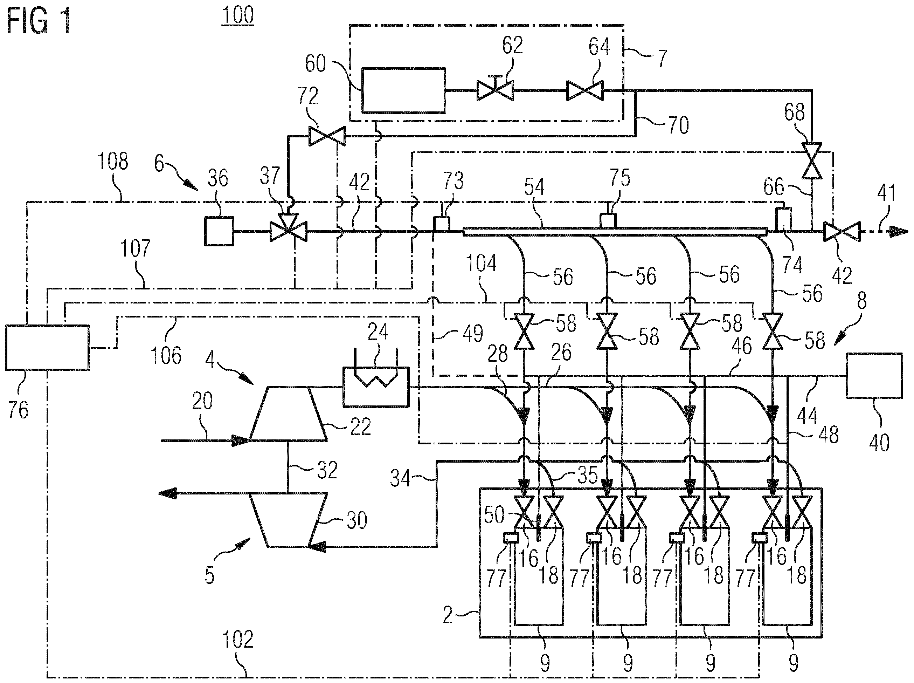

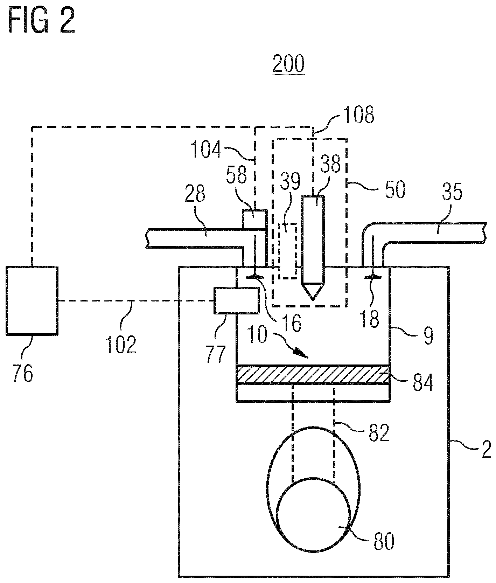

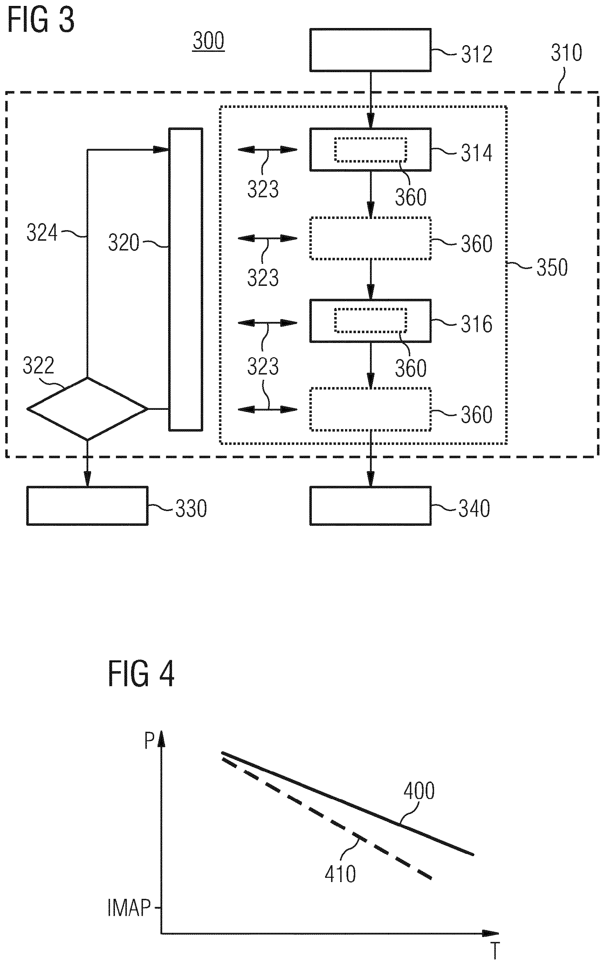

In the following, internal combustion engines operable on liquid fuel and gaseous fuel are described in connection with Figs. 1 and 2. An exemplary method for setting the starting conditions for adding gaseous fuel for initiating gaseous fuel operation of a DF internal combustion engine, which is inter alia based on a method for evaluating operability of gaseous fuel admission valves using a combustion analysis during inert gas flushing, is exemplarily described in connections with Figs. 3 and 4.

Internal combustion engine 100 comprises an engine block 2, a charge air system 4, an exhaust gas system 5, a gaseous fuel system 6 including a purge gas system 7, and a liquid fuel system 8. Internal combustion engine 100 can be powered with a liquid fuel such as, for example, Diesel fuel in LFM, and in GFM with a gaseous fuel such as natural gas, provided for example by an LNG-system.

Engine block 2 comprises a plurality of cylinders. Exemplarily, four cylinders 9 are depicted in Fig. 1. Engine block 2 may be of any size, with any number of cylinders, such as 6, 8, 12, 16, or 20, and in any configuration, for example, "V," in-line, or radial configuration.

Each cylinder 9 is equipped with at least one inlet valve 16 (e.g. two) and at least one outlet valve 18 (also e.g. two). Inlet valves 16 are fluidly connected to charge air system 4 and configured to provide charge air, or a mixture of charge air and gaseous fuel into cylinders 9. Analogous, outlet valves 18 are fluidly connected to exhaust gas system 5 and configured to direct exhaust gas out of respective cylinders 9.

Charge air (also referred to as inlet air) is provided by charge air system 4 including an air intake 20, a compressor 22 to pressurize the air, and a charge air cooler 24. A (charge air) inlet manifold 26 is fluidly connected downstream of charge air cooler 24 and guides charge air via cylinder specific inlet channels 28 into respective cylinders 9. Within inlet manifold 26, the pressure is set by compressor 22 and is also referred to as inlet manifold air pressure (IMAP).

Exhaust gas system 5 includes an exhaust gas turbine 30 connected to compressor 22 via shaft 32 and an (exhaust gas) exit manifold 34 guiding exhaust gas from individual exhaust gas outlet channels 35 to exhaust gas turbine 30.

Charge air system 4 may comprise one or more inlet manifolds 26. Similarly, exhaust gas system 5 may comprise one or more exit manifolds 34.

Exhaust gas turbine 30 and compressor 22 may be part of a single-stage or multi-stage turbocharged system. The turbocharged system allows to modify the common pressure (IMAP) of the charge air provided to inlet manifold 26 within a pre-set range.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering respective cylinders 9.

Operating inlet valves 16 and outlet valves 18 may be subject to cylinder-specific timings, i.e. opening time and closing time and, thus, opening duration during the oscillation of the piston. In dependence of those parameters, the amount of air provided into each cylinder for combustion can be adjusted.

Gaseous fuel system 6 comprises a gaseous fuel source 36 connected to gaseous fuel piping 42. Gaseous fuel source 36 constitutes a gaseous fuel feed for supplying gaseous fuel for combustion in GFM. For example, gaseous fuel source 36 comprises a gas valve unit and a gaseous fuel tank that contains natural gas in a pressurized state.

The gas valve unit of gaseous fuel system 6 may be configured to allow, to block, and to control flow from the gaseous fuel tank into gaseous fuel piping 42. The gas valve unit may comprise gaseous fuel control valves, gaseous fuel shut-off valves and venting valves.

As shown in Fig. 1, gaseous fuel piping 42 is fluidly connected to a gaseous fuel manifold 54 which comprises a plurality of gaseous fuel channels 56. Each gaseous fuel channel 56 is fluidly connected to one of the plurality of inlet channels 28. To dose gaseous fuel into individual inlet channels 28, for example, in each gaseous fuel channel 56, a gaseous fuel admission valve (GAV) 58 is installed. In some embodiments, internal combustion engine 100 may comprise more than one gaseous fuel manifold 54.

Accordingly, in the embodiment of Fig. 1, gaseous fuel system 6 includes the following volumes that are filled with gaseous fuel during GFM: the gas valve unit and the gaseous fuel tank of gaseous fuel source 36; separable therefrom via a valve 37, gaseous fuel piping 42, and gaseous fuel manifold 54 with gaseous fuel channels 56. Each gaseous fuel channel 56 is fluidly connectable to the respective inlet channels 28 of inlet manifold 26 by respective GAV 58.

Gaseous fuel system 6 further comprises at least one flushing valve for receiving a purge gas such as purge gas supply valve 37 and at least one discharge valve for discharging the purge gas such as a discharge valve 42, for fluidly connecting a relief path 41 with gaseous fuel manifold 54.

Each GAV 58 is configured to allow or to block flow of gaseous fuel into an individual inlet channel 28 to mix with compressed charge air from charge air system 4 in GFM. For example, cylinder specific mixing zones downstream of GAV 58 are provided. For example, GAV 58 may be solenoid actuated plate valves in which springs hold a lower surface of a movable disk against an upper surface of a stationary disk or plate, the two surfaces being configured to provide a sealed relationship in a closed state of GAV 58. Each GAV 58 may be mounted to a cylinder head covering at least one cylinder 9.

In the embodiment shown in Fig. 1, purge gas system 7 comprises a purge gas tank 60, a purge gas control valve 62, and a purge gas shut-off valve 64 connected in series. Purge gas tank 60 constitutes a purge gas source to flush gaseous fuel system 6 including gaseous fuel piping 42, gaseous fuel manifold 54, etc. with a purge gas such as nitrogen in a pressurized state. During LFM, for safety reasons, piping close to the engine is freed from gaseous fuel and, thereby, air and water may enter the piping during LFM. Prior filling the freed sections of gaseous fuel system 6 with gaseous fuel, flushing the same with, for example, nitrogen is done for safety considerations to, e.g., remove any air (and thus oxygen) and moisture (water condensate) there from. For the flushing, purge gas supply and discharge valves (e.g. supply valve 37 and discharge valve 42) may be opened and the content may be flushed to secure location(s) via relief paths such as relief path 41 exemplarily shown in Fig. 1. In some operational procedures, also gaseous fuel admission valve 58 may be used as a flushing exit, thereby releasing the purge gas and/or a mixture of purge gas with gaseous fuel into the charge air.

Purge gas system 7 may be fluidly connected to gaseous fuel system 6 at various locations. For example, in Fig. 1 a first connection 66 is disposed proximal to gaseous fuel manifold 54. A second connection 70 is disposed at or proximal to gaseous fuel source 36 at supply valve 37. First shut-off valve 68 and second shut-off valve 72 can block or allow a purge gas flow through first connection 66 and second connection 70, respectively. Additional connections may be integrated to selectively flush various section of the gaseous fuel system 6 such as the gas valve unit of gaseous fuel source 36.

Referring again to Fig. 1, liquid fuel system 8 comprises a liquid fuel tank 40 connected to a liquid fuel piping 44. Liquid fuel tank 40 may comprise a first liquid fuel tank for storing a first liquid fuel, for example, heavy fuel oil (HFO), and a second liquid fuel tank for storing a second liquid fuel, for example Diesel fuel. Liquid fuel tank 40 constitutes a liquid fuel source for supplying liquid fuel for combustion in LFM. Additionally, liquid fuel tank 40 may constitute a liquid fuel source for supplying ignition fuel in GFM.

Liquid fuel piping 44 is fluidly connected to a liquid fuel manifold 46 having a plurality of liquid fuel inlet channels 48. To dose liquid fuel into the combustion chamber of cylinder 9, in each liquid fuel inlet channel 48 a fuel injection system 50 is installed.

In some embodiments of a DF internal combustion engine, GFM may be based on a spark ignited gaseous fuel combustion and fuel injection system 50 may be fluidly connected to gaseous fuel source 36 (indicated by a dashed line 49 in Fig. 1). In that embodiment, fuel injection system 50 may comprise a pre-combustion chamber for providing spark ignited pilot flames (not shown) to ignite the mixture of gaseous fuel and air. In some embodiments of spark ignition, the pre-chamber ignition may contribute, for example, in the range from 2 % to 8 % such as 5 % of the fuel amount being combusted.

As further shown in Fig. 1, internal combustion engine 100 may comprise a sensor unit with at least one pressure sensor for measuring a pressure associated with the flushing and/or pressurizing, for example, at the supply side, the discharge side of the observed volume such as gaseous fuel manifold 58, and/or within the observed volume. In Fig. 1, respective sensors 73, 74, and 75 are exemplarily indicated for illustration purposes with respect to gaseous fuel manifold 54. Moreover, sensor unit may comprise sensors such as pressure sensors 77, for example (at least) one for each cylinder 9. Each pressure sensor is configured to generate a signal corresponding to a temporal development of a respective pressure and thus provides pressure data, for example, to a control system to assess the data, in particular with respect to operability of gaseous fuel admission valves.

Referring to Fig. 1, to control operation of engine 100, a control unit 76 is provided. Control unit 76 forms part of a control system of the engine. Control unit 76 is configured to receive data of pressure sensors via a readout connection lines such as lines 102 and 108. Control unit 76 may further be configured to control various components of engine 100 such as gaseous fuel admission valves 58 via a control connection line 104 and fuel injection system 50 via a control connection line 106. Control unit 76 may further be configured to control inlet valves 16, outlet valves 18, and via control connection lines 107 purge gas system 7 and the valves of purge gas system 7. In some embodiments, a second control unit may be provided to control the engine operation as mentioned above. Further description of the control system and additional control lines between control unit 76 and other components of the engine, such as the fuel injection system 50, will be given in connection with Fig. 2. In general, the control system may comprise electronic control elements of the control unit 76 as well as mechanical control elements.

In addition or alternatively, control unit 76 may be connected to other sensors not shown in Fig. 1 such as engine load sensors, engine speed sensors, temperature sensor and NOx sensors provided for a common exhaust of the plurality of cylinders. Control unit 76 may also be connected to an operator panel (not shown) for issuing a warning to the operator, indicating a failure of the engine, the switching between modes, or the like.

Exemplary embodiments of fuel injection system 50 for DF internal combustion engines are described in more detail in reference to Fig. 2. Specifically, Fig. 2 shows a cylinder 9 of a DF internal combustion engine 200 which is an exemplary embodiment of internal combustion engine 100 of Fig. 1. Elements already described in connection with Fig. 1 have the same reference numerals, such as engine block 2, control unit 76, pressure sensor 77, and cylinder 9.

Cylinder 9 provides at least one combustion chamber 10 for combusting a mixture of gaseous fuel and air, a piston 84, and a crankshaft 80 which is drivingly connected to piston 84 via a piston rod 82. Piston 84 is configured to reciprocate within cylinder 9.

Cylinder 9 is connected to inlet manifold 26 via inlet channel 28 and to exit manifold 34 via outlet channel 35 (see also Fig. 1). Inlet valve 16 is disposed in inlet channel 28, and outlet valve 18 is disposed in outlet channel 35. GAV 58 controls the passing of gaseous fuel to combustion chamber 10 of cylinder 9.

Fig. 2 further illustrates fuel injection system 50 schematically by a dashed box. When DF internal combustion engine 200 is operated in LFM, fuel injection system 50 is used to inject liquid fuel into combustion chamber 10, the liquid fuel being the sole source of energy. When DF internal combustion engine 200 is operated in GFM, fuel injection system 50 may be used to inject an ignition amount of liquid (ignition) fuel into combustion chamber 10 to ignite the mixture of gaseous fuel and air. In GFM, fuel injection system 50 may therefore function as a gaseous fuel ignition system. During transitions from LFM to GFM and vice versa, the contribution of liquid fuel to the combustion process is increasingly replaced by a contribution of gaseous fuel to the combustion process and vice versa. Specific control procedures for the transition may be based, for example, on maintaining a respective power output of the engine constant or at least within a pre-set range and perform the transition based, for example, on a predefined transition rate by increasing the opening duration of the solenoid actuated GAVs and reducing the amount of liquid fuel respectively.

In the exemplary embodiment of Fig. 2, such a gaseous fuel ignition system is based on a main liquid fuel injector 38 for injecting into combustion chamber 10 a large amount of liquid fuel in LFM as well as, in GFM, an ignition amount of liquid fuel to ignite the mixture of gaseous fuel and air. In other embodiments, such as for heavy duty DF internal combustion engines, gaseous fuel ignition system may comprise a separate ignition liquid fuel injector 39 to inject the ignition amount of liquid fuel into combustion chamber 10 in GFM.

Cylinder 9 further comprises pressure sensor 77 to measure a temporal development of an internal cylinder pressure during the operation of the engine. Pressure sensor 77 may be a capacitive pressure sensor, an electromagnetic pressure sensor, a piezoelectric pressure sensor, an optical pressure sensor or any other pressure sensor known in the art. Pressure sensor 77 may be mounted at any location of cylinder 9 convenient for measuring the cylinder pressure during operation of the engine. For example, pressure sensor 77 may be mounted within a cylinder side wall or at the cylinder head face. Pressure sensor 77 may reach at least partly into the combustion chamber of cylinder 9, for example through a bore in a cylinder side wall. Information on the internal cylinder pressure may additionally or alternatively be provided by pressure analysis of inlet and/or exhaust pressure for each cylinder.

Pressure sensor 77 may further be disposed outside of the combustion chamber 10 to detect the cylinder pressure indirectly. For example, pressure sensor 77 may be mounted at an existing component of the engine, such as a bolt head, spark plug boss, etc. Pressure sensor 77 may sense stress of that component during combustion, the stress corresponding to the internal cylinder pressure during combustion.

DF internal combustion engine 200 additionally comprises a control system including control unit 76. Control unit 76 is connected to main liquid fuel injector 38 via control connection line 108 and, in case of heavy duty DF internal combustion engines, also to ignition liquid fuel injector 39 via a separate control connection line (not shown).

In general, control unit 76 of an engine as disclosed in connection with Figs. 1 and 2 may be a single microprocessor or multi microprocessors that include means for controlling, among others, an operation of various components of the internal combustion engine. Control unit 76 may be a general engine control unit (ECU) capable of controlling numerous functions associated with the internal combustion engine and/or its associated components. Control unit 76 may include all components required to run an application such as, for example, a memory, a secondary storage device, and a processor such as a central processing unit or any other means known in the art for controlling the internal combustion engine and its components. Various other known circuits may be associated with control unit 76, including power supply circuitry, signal conditioning circuitry, communication circuitry and other appropriate circuitry. Control unit 76 may analyze and compare received and stored data and, based on instructions and data stored in memory or input by a user, determine whether action is required. For example, control unit 76 may compare received pressure data from pressure sensor 77 with target values stored in memory, and, based on the results of the comparison, transmit signals to one or more components of the engine to alter the operation of the same.

When the internal combustion engine is operated, the pressure situation may vary from cylinder to cylinder with respect to charge air, exhaust, gaseous fuel. Then, also the air provided to the combustion chamber as well as the fuel amount may vary and similarly, the power of the cylinders as well as the respective exhaust pressure.

When switching to GFM, it may be desirable to measure and evaluate one or more combustion process parameters cylinder-specifically and access therefrom the operability of GAVs to avoid switching into GFM with a malfunctioning GAV.

### Industrial Applicability

Exemplary internal combustion engines suited to the disclosed methods are, for example, DF internal combustion engines of the series M46DF and M34DF manufactured by Caterpillar Motoren GmbH & Co. KG, Kiel, Germany. One skilled in the art would appreciate, however, that the disclosed method can be adapted to suit other internal combustion engines as well.

In the following, operation and control of DF internal combustion engines as exemplarily described with reference to Figs. 1 and 2 are disclosed in connection with Figs. 3 and 4. For illustration purposes, the methods are disclosed with reference to structural elements disclosed in connection with Figs. 1 and 2. However, the skilled person will understand that the respective steps can be performed on other embodiments as well.

Referring to Fig. 3, a flow chart of a process 300 setting the starting conditions for adding gaseous fuel for initiating gaseous fuel operation of a DF internal combustion engine is shown. Process 300 is inter alia based on a method for evaluating air-tightness of gaseous fuel system 6 in general and, specifically, of the gaseous fuel manifold 54 and the tight closing of the same via gaseous fuel admission valves 58. The respective test accordingly may also provide information about the operability of the gaseous fuel admission valves in general and, in some embodiments, of specific individual gaseous fuel admission valves. Process 300 takes place prior liquid fuel is supplied to (e.g. initially added to) gaseous fuel manifold 54 with gaseous fuel channels 56 but may also be applied during the mixing phase of the gaseous fuel with the purge gas or even when using the gaseous fuel as a purge gas. Process 300 includes a first GAV testing phase 310 and a second GAV testing phase 350 (associated with dotted elements in Fig. 3). Although disclosed in combination and in a specific sequence, those two testing phases are principally independent from each other and, thus, may be performed independently from each other.

Process 300 may start at operating DF internal combustion engine 100 in LFM (step 312). Then, a control signal to switch to gaseous fuel operation is initiated, for example, by an operator.

As a first step of first GAV testing phase 310, those sections of gaseous fuel system 6 not under pressure by gaseous fuel are flushed with purge gas (step 314). For example, purge gas system 7 is operated to provide pressurized nitrogen (as an example for a purge gas) via valve 68 and supply valve 37 to gaseous fuel manifold 54 at a pressure above the charge air pressure (IMAP), specifically at least 0.2 bar such as above 0.5 bar, for example, in a range from 1 bar to 2 bar or even up to 5 bar or more over IMAP. The flushing is maintained by discharging the nitrogen, for example, via relief path 41 until it can be assumed that only the purge gas is within gaseous fuel manifold 54 and gaseous fuel channels 56. At the end of the flushing, all valves may be closed to contain the flushed section under the pressurized inert gas (step 316). Step 316 may also be performed without flushing and is generally referred to as pressurizing the - to be analyzed - section of the gaseous fuel system such as gaseous fuel manifold 54.

During the flushing and/or the maintaining under pressurized inert gas, the pressure within the flushed section, e.g. within gaseous fuel manifold 54, is monitored (step 320) for example using pressure sensor 75. In addition or alternatively, the supply pressure as well as the discharge pressure may be measured via pressure sensors 73 and 74, respectively. Then, the detected temporal pressure behavior is evaluated (step 322), for example compared with an expected pressure behavior that can be assumed for the flushing and/or the maintaining of the pressure (e.g. constant pressure or specific drop rate).

During monitoring step 320, an evaluation of the pressure may be continuously performed or may be done, stepwise for different pressure regions. If a deviation of the measured pressure behavior from the expected pressure behavior is identified, switching to gaseous fuel is aborted (step 330). For example, a required purging gas pressure may not be reached due to a leakage in the gas system and/or a malfunctioning (e.g. not properly closing) GAV. For a leaking (defect) GAV, the leaking purge gas may not affect the combustion process in the respective cylinder such - that at this stage - a damage to the engine is still avoided. Assuming that the first GAV testing phase 310 was performed successfully, purge gas valves 68 and 72 are closed, thereby preparing the system for gaseous fuel operation (step340). For example, gaseous fuel may be supplied to gaseous fuel manifold 54 and added to the combustion at a slightly increasing rate.

As previously indicated first GAV testing phase 310 may accompanied from second GAV testing phase 350 or second GAV testing phase 350 may be performed independently as long as a similar condition for second testing phase 350 are provided (for example an essentially stationary pressure is build up upstream of GAVs 58). In general, the continuous monitoring during the various steps is indicated by arrows 363.

Second GAV testing phase 350 is based on actuation of GAVs 58 (step 360) while flushing (step 314), after flushing, or when the system is kept pressurized without adding addition purge gas (step 316).

Second GAV testing phase 350 may include a single or multiple opening/closing cycles of GAVs 58 such as two or three opening/closing cycles. The opening/closing cycle(s) may allow entering or moving of particulates to result in a contamination of the valve that affects its tightness. On the other side, the opening/closing cycles may remove any particulates from the GAV, thereby making it working properly again. In any case, second GAV testing phase will provide at its end measured pressure data (step 320) that are then evaluated as disclosed above (step 322). During the opening/closing cycles, the purge gas pressure is maintained above IMAP, e.g. above at least 0.2 bar or 0.5 bar such as in a range from 1 bar to 2 bar. In some embodiments, the opening transitions directly into the closing, i.e. without an opened time period in-between. If a longer gas exchange is desired, some opening time period such as 1.5 ms to 3 ms may be provided.

In general, the measured pressure data may be acquired during some time period, such as time periods in the range from 10 s to 50 s, or more. The evaluation may be based, for example, on the pressure difference between the beginning and the end of that acquisition time period. That change in pressure may be compared with the change in pressure for a well operating system.

In some embodiments, evaluation step 320 may comprise comparing a measured temporal behavior as illustrated exemplarily in Fig. 4 by graph 410 and an expected behavior as illustrated exemplarily in Fig. 4 by graph 400. In some embodiments, values derived from the measured pressure data or a sub-group of measured data are used.

In some embodiments, one may perform actuation step(s) 360 for at least one cylinder 9 of the plurality of cylinders 9 or for a sub-group of cylinders or only individual ones, one after the

In some embodiments, the differential gas pressure across GAVs 58 is set such that a properly operating gaseous fuel admission valve 58 is properly sealing. The differential gas pressure across GAVs 58 may be at least 1 bar; for example, the differential gas pressure may be at least 0.2 bar or 0.5 bar such as in the range from 1 bar to 2 bar above the IMAP.

At this stage, it can be continued with adding gaseous fuel to gaseous fuel manifold 54 such that a transition from a liquid fuel based combustion to a gaseous fuel based combustion is initiated..

Referring again to the evaluation of the operability of GAVs, the evaluation can be performed from the beginning, i.e. already during the flushing step 314 as well as when the inert gas pressure is maintained (step 316).

The purge gas pressure may be modified, for example, stepwise such that during stationary time intervals, the evaluation of the measured pressure data is performed.

In some embodiments, a differential gas pressure across gaseous fuel admission valves may not be required for porperly sealing the gaseous fuel admission valves. In those embodiments as well as when the engine is not operating in LFM, suitable pressure ranges for flushing and maintaining may be above ambient pressure, for example at least 0.2 bar, at least 0.5 bar, or at least 1 bar, for example in the range from 1 bar to 2 bar or even up to 5 bar or more, above the ambient pressure.

The herein disclosed switching procedure can be controlled, for example, using control unit 76. For example, control unit 76 receives the pressure data and analyzes the same. In some embodiments, threshold level(s) may be stored on the memory of control unit 76 as a fixed value, e.g. for a drop rate, or may be determined based on empirical values typical for the engine and boundary conditions. The predetermined threshold level may further depend on further parameters such as the load of the internal combustion engine. In this case, control unit 76 may additionally be connected to, e.g. engine load, sensors configured to receive those parameters.

The herein disclosed aspects are, for example, relevant with respect to the safe operation of marine DF internal combustion engines. For those engines, Marine Class Society may demand specific safety routines when switching between LFM and GFM. First and second GAV testing phases may ensure or at least help that engines such as DF internal combustion engines of the series M46DF and M34DF comply with those regulation by initiating appropriate control steps such as not allowing or terminating the switching process once a malfunctioning GAVs is detected.

The herein disclosed methods for evaluating the operability of GAVs may be performed every time before switching from LFM to GFM. However, in some embodiments, the disclosed methods may also be applied when the engine is turned off or periodically or at arbitrary time intervals during the operation in LFM.

Although the preferred embodiments of this invention have been described herein, improvements and modifications may be incorporated. The invention is defined by the following claims.

## Claims

1. A method of evaluating air-tightness of a gaseous fuel manifold (54) of a dual fuel internal combustion engine (100) with a plurality of cylinders (9) and at least one gaseous fuel admission valve (58) for each cylinder (9) of the plurality of cylinders (9) fluidly delimiting the gaseous fuel manifold (54) with respect to the respective cylinder (9), the method comprising:
flushing (step 314) and/or pressurizing (step 316) the gaseous fuel manifold (54) with a purge gas at a pressure above an intake manifold air pressure thereby setting a differential gas pressure across gaseous fuel admission valves (58);
measuring (step 320) a pressure associated with the flushing (step 314) and/or the pressurizing (step 316), thereby generating pressure data; and
evaluating (step 322) the air-tightness of a gaseous fuel manifold (54) based on the measured pressure data, the method being **characterized in that** nitrogen is used as a purge gas.

2. The method of claim 1, wherein the flushing (step 314) with purge gas comprises adding purge gas at purge gas supply end of the gaseous fuel manifold (54) at a supply pressure and discharging the purge gas at a purge gas discharge end of the gaseous fuel manifold (54) and/or the pressure data relate to a pressure difference between the supply pressure and a discharge pressure derived from pressure data measured for the discharged purge gas.

3. The method of claim 1, wherein the pressurizing (step 316) with purge gas comprises supplying purge gas to the gaseous fuel manifold (54) and closing at least one valve (37, 42) to provide a volume including the volume of the gaseous fuel manifold (54); and/or
the pressure data relate to a pressure of the purge gas within the gaseous fuel manifold (54), in particular a temporal development of the pressure of the purge gas within the gaseous fuel manifold (54).

4. The method of any one of claim 1 to claim 3, wherein evaluating (step 322) the air-tightness of a gaseous fuel manifold (54) comprises:
providing a sample data of a temporal development of the pressure data;
comparing the measured pressure data and the sample data;
determining that the deviation of the measured pressure data from the sample data is beyond a threshold value; and
identifying the gaseous fuel manifold (54) to be leaking.

5. The method of claim 4, wherein the threshold value is a pre-set pressure value and/or change over time of the pressure such as a decay rate and/or the threshold value depends on at least one of the load of the dual fuel internal combustion engine (100), the inlet manifold air pressure, and temperature conditions.

6. The method of any one of the preceding claims, wherein the purge gas supply pressure is at least 0.2 bar, at least 0.5 bar, or at least 1 bar, for example in the range from 1 bar to 2 bar or even up to 5 bar or more, above the inlet manifold air pressure.

7. The method of any one of the preceding claims, further comprising
activating (step 360) at least one of the gaseous fuel admission valves while flushing (step 314), after flushing, in-between flushing or when the system is kept pressurized (step 316).

8. The method of claim 7, wherein the at least one of the gaseous fuel admission valves (58) is opened and closed at least once such as one time, twice, or three times and/or
wherein at least one of the gaseous fuel admission valves (58) is opened with or without having an opening time between opening and closing prior or in-between measuring (step 320) the pressure.

9. The method of claim 7 or claim 8, further comprising:
activating, for example separately or group-wise, the gaseous fuel admission valves (58), thereby adding purge gas to the inlet.

10. The method of any one of claim 7 to claim 9, wherein the evaluating (step 322) is performed before and after the opening and any change in behavior is analyzed with respect to gaseous fuel admission valve specific operability.

11. The method of any one of the preceding claims, wherein the method of any one of the preceding claims is performed, for example periodically or at arbitrary time intervals, while the dual fuel internal combustion engine (100) is turned off or while operating (step 312) the dual fuel internal combustion engine (100) on liquid fuel.

12. A method of controlling an initialization process (300) for setting the starting conditions for adding gaseous fuel for switching to gaseous fuel operation of a dual fuel internal combustion engine (100) comprising a plurality of cylinders (9) and at least one gaseous fuel admission valve for each cylinder (9) of the plurality of cylinders (9), the method comprising:
performing the method of evaluating air-tightness of a gaseous fuel manifold (54) of a dual fuel internal combustion engine (100) according to any one of the preceding claims; and
aborting (step 330) the initialization process (300) as soon as the evaluation of the evaluating air-tightness of the gaseous fuel manifold (54) based on the measured pressure value indicates insufficient air-tightness.

13. A dual fuel internal combustion engine (100), comprising:
a liquid fuel system (8);
a gaseous fuel system (6) including a gaseous fuel manifold (54);
a plurality of cylinders (9), respectively connected to the gaseous fuel manifold (54);
a gaseous fuel admission valve (58) for each cylinder (9) of the plurality of cylinders (9), fluidly connecting the gaseous fuel manifold (54) with the respective cylinder (9);
at least one purge gas supply valve (37) for flushing and/or pressurizing the gaseous fuel manifold (54) with nitrogen as a purge gas;
a sensor unit (77) for measuring pressure data associated with flushing and/or pressurizing the gaseous fuel manifold (54); and
a control unit (76) configured to perform the method according to any one of the preceding claims.

14. The internal combustion engine (100) of claim 13, further comprising:
at least one purge gas discharge valve (42), for example, located with respect to the at least one purge gas supply valve (37) at an opposing end of the gaseous fuel manifold (54).

15. The internal combustion engine (100) of claim 13 or claim 14, wherein the sensor unit (77) comprises at least one pressure sensor at the supply side, the discharge side, and/or within the observed volume.

## Patentansprüche

1. Verfahren zum Bewerten der Luftdichtigkeit eines Gaskraftstoffverteilers (54) eines Zweikraftstoffverbrennungsmotors (100) mit einer Vielzahl von Zylindern (9) und mindestens einem Gaskraftstoffeinlassventil (58) für jeden Zylinder (9) der Vielzahl von Zylindern (9), das den Gaskraftstoffverteiler (54) in Bezug auf den jeweiligen Zylinder (9) fluidisch begrenzt, wobei das Verfahren umfasst:
Spülen (Schritt 314) und/oder Druckbeaufschlagen (Schritt 316) des Gaskraftstoffverteilers (54) mit einem Spülgas bei einem Druck oberhalb eines Luftdrucks des Ansaugkrümmers, wodurch ein Differenzgasdruck über Gaskraftstoffeinlassventile (58) eingestellt wird;
Messen (Schritt 320) eines der Spülung (Schritt 314) und/oder der Druckbeaufschlagung (Schritt 316) zugeordneten Drucks, wodurch Druckdaten generiert werden; und
Bewerten (Schritt 322) der Luftdichtigkeit eines Gaskraftstoffverteilers (54) basierend auf den gemessenen Druckdaten, wobei das Verfahren **dadurch gekennzeichnet ist, dass** Stickstoff als Spülgas verwendet wird.

2. Verfahren nach Anspruch 1, wobei das Spülen (Schritt 314) mit Spülgas das Hinzufügen von Spülgas am Spülgaszufuhrende des Gaskraftstoffverteilers (54) bei einem Förderdruck und das Abführen des Spülgases an einem Spülgasaustrittsende des Gaskraftstoffverteilers (54) umfasst und/oder die Druckdaten sich auf eine Druckdifferenz zwischen dem Förderdruck und einem Auslassdruck beziehen, der von den für das abgeführte Spülgas gemessenen Druckdaten abgeleitet ist.

3. Verfahren nach Anspruch 1, wobei das Druckbeaufschlagen (Schritt 316) mit Spülgas das Zuführen von Spülgas zum Gaskraftstoffverteiler (54) und das Schließen mindestens eines Ventils (37, 42) umfasst, um ein Volumen bereitzustellen, das das Volumen des Gaskraftstoffverteilers (54) beinhaltet; und/oder
die Druckdaten sich auf einen Druck des Spülgases innerhalb des Gaskraftstoffverteilers (54) beziehen, insbesondere auf eine zeitliche Entwicklung des Drucks des Spülgases innerhalb des Gaskraftstoffverteilers (54).

4. Verfahren nach einem der Ansprüche 1 bis 3, wobei das Bewerten (Schritt 322) der Luftdichtigkeit eines Gaskraftstoffverteilers (54) umfasst:
Bereitstellen von Stichprobendaten zu einem zeitlichen Verlauf der Druckdaten;
Vergleichen der gemessenen Druckdaten mit den Stichprobendaten;
Bestimmen, dass die Abweichung der gemessenen Druckdaten von den Stichprobendaten über einem Schwellenwert liegt; und
Identifizieren des Gaskraftstoffverteilers (54) als undicht.

5. Verfahren nach Anspruch 4, wobei der Schwellenwert ein voreingestellter Druckwert und/oder eine Veränderung des Drucks im Zeitverlauf, wie beispielsweise eine Abklingrate, ist, und/oder der Schwellenwert von mindestens einem von der Last des Zweikraftstoffverbrennungsmotors (100), dem Ansaugkrümmer-Luftdruck und den Temperaturbedingungen abhängig ist.

6. Verfahren nach einem der vorstehenden Ansprüche, wobei der Spülgasförderdruck mindestens 0,2 bar, mindestens 0,5 bar oder mindestens 1 bar, beispielsweise im Bereich von 1 bar bis 2 bar oder sogar bis zu 5 bar oder mehr, über dem Luftdruck des Ansaugkrümmers liegt.

7. Verfahren nach einem der vorhergehenden Ansprüche, ferner umfassend ein Aktivieren (Schritt 360) von mindestens einem der Gaskraftstoffeinlassventile während des Spülvorgangs (Schritt 314), nach dem Spülvorgang, zwischen den Spülvorgängen, oder wenn das System unter Druck gesetzt wird (Schritt 316).

8. Verfahren nach Anspruch 7, wobei das mindestens eine der Gaskraftstoffeinlassventile (58) mindestens einmal geöffnet und geschlossen wird, wie beispielsweise einmal, zweimal oder dreimal, und/oder
wobei mindestens eines der Gaskraftstoffeinlassventile (58) mit oder ohne einer Öffnungszeit zwischen dem Öffnen und Schließen vor oder zwischen dem Messen (Schritt 320) des Drucks geöffnet wird.

9. Verfahren nach Anspruch 7 oder Anspruch 8, ferner umfassend: Aktivieren, zum Beispiel separat oder gruppenweise, der Gaskraftstoffeinlassventile (58), wodurch dem Einlass Spülgas zugeführt wird.

10. Verfahren nach einem der Ansprüche 7 bis Anspruch 9, wobei die Bewertung (Schritt 322) vor und nach dem Öffnen durchgeführt wird und jede Verhaltensänderung in Bezug auf die spezifische Funktionsfähigkeit des Gaskraftstoffeinlassventils analysiert wird.

11. Verfahren nach einem der vorhergehenden Ansprüche, wobei das Verfahren nach einem der vorhergehenden Ansprüche beispielsweise periodisch oder in beliebigen Zeitabständen durchgeführt wird, während der Zweikraftstoffverbrennungsmotor (100) abgeschaltet ist oder während des Betriebs (Schritt 312) des Zweikraftstoffverbrennungsmotors (100) mit flüssigem Kraftstoff.

12. Verfahren zum Steuern eines Initialisierungsprozesses (300) zum Einstellen der Startbedingungen für das Hinzufügen von gasförmigem Kraftstoff zum Umschalten auf Gaskraftstoffbetrieb eines Zweikraftstoffverbrennungsmotors (100), der eine Vielzahl von Zylindern (9) und mindestens ein Gaskraftstoffeinlassventil für jeden Zylinder (9) der Vielzahl von Zylindern (9) umfasst, wobei das Verfahren umfasst:
Durchführen des Verfahrens zum Bewerten der Luftdichtigkeit eines Gaskraftstoffverteilers (54) eines Zweikraftstoffverbrennungsmotors (100) nach einem der vorhergehenden Ansprüche; und
Abbrechen (Schritt 330) des Initialisierungsprozesses (300), sobald die Bewertung des Bewertens der Luftdichtigkeit des Gaskraftstoffverteilers (54) basierend auf dem gemessenen Druckwert eine unzureichende Luftdichtigkeit anzeigt.

13. Zweikraftstoffverbrennungsmotor (100), umfassend:
ein Flüssigkraftstoffsystem (8);
ein Gaskraftstoffsystem (6), einschließlich eines Gaskraftstoffverteilers (54);
eine Vielzahl von Zylindern (9), die jeweils mit dem Gaskraftstoffverteiler (54) verbunden sind;
ein Gaskraftstoffeinlassventil (58) für jeden Zylinder (9) der Vielzahl von Zylindern (9), das den Gaskraftstoffverteiler (54) mit dem jeweiligen Zylinder (9) fluidisch verbindet;
mindestens ein Spülgaszufuhrventil (37) zum Spülen und/oder Druckbeaufschlagen des Gaskraftstoffverteilers (54) mit Stickstoff als Spülgas;
eine Sensoreinheit (77) zum Messen von Druckdaten, die mit dem Spülen und/oder Druckbeaufschlagen des Gaskraftstoffverteilers (54) verbunden sind; und
eine Steuereinheit (76), die konfiguriert ist, um das Verfahren gemäß einem der vorhergehenden Ansprüche durchzuführen.

14. Verbrennungsmotor (100) nach Anspruch 13, ferner umfassend:
mindestens ein Spülgasauslassventil (42), das in Bezug auf das mindestens eine Spülgaszufuhrventil (37) beispielsweise an einem gegenüberliegenden Ende des Gaskraftstoffverteilers (54) angeordnet ist.

15. Verbrennungsmotor (100) nach Anspruch 13 oder Anspruch 14, wobei die Sensoreinheit (77) mindestens einen Drucksensor auf der Förderseite, der Auslassseite und/oder innerhalb des beobachteten Volumens umfasst.

## Revendications

1. Procédé d'évaluation de l'étanchéité à l'air d'un collecteur de carburant gazeux (54) d'un moteur à combustion interne bicarburant (100) avec une pluralité de cylindres (9) et au moins une soupape d'admission de carburant gazeux (58) pour chaque cylindre (9) de la pluralité de cylindres (9) délimitant fluidiquement le collecteur de carburant gazeux (54) par rapport au cylindre (9) respectif, le procédé comprenant :
le rinçage (étape 314) et/ou la mise sous pression (étape 316) du collecteur de carburant gazeux (54) avec un gaz de purge à une pression supérieure à une pression d'air de collecteur d'admission en établissant de ce fait une pression de gaz différentielle à travers des soupapes d'admission de carburant gazeux (58) ;
la mesure (étape 320) d'une pression associée au rinçage (étape 314) et/ou à la mise sous pression (étape 316), en générant de ce fait des données de pression ; et
l'évaluation (étape 322) de l'étanchéité à l'air d'un collecteur de carburant gazeux (54) sur la base des données de pression mesurées, le procédé étant **caractérisé en ce que** de l'azote est utilisé en tant que gaz de purge.

2. Procédé selon la revendication 1, dans lequel le rinçage (étape 314) avec un gaz de purge comprend l'ajout d'un gaz de purge au niveau d'une extrémité d'alimentation de gaz de purge du collecteur de carburant gazeux (54) à une pression d'alimentation et l'évacuation du gaz de purge au niveau d'une extrémité d'évacuation de gaz de purge du collecteur de carburant gazeux (54) et/ou les données de pression se rapportent à une différence de pression entre la pression d'alimentation et une pression d'évacuation dérivée de données de pression mesurées pour le gaz de purge évacué.

3. Procédé selon la revendication 1, dans lequel la mise sous pression (étape 316) avec un gaz de purge comprend l'alimentation de gaz de purge au collecteur de carburant gazeux (54) et la fermeture d'au moins une soupape (37, 42) pour fournir un volume incluant le volume du collecteur de carburant gazeux (54) ; et/ou
les données de pression se rapportent à une pression du gaz de purge au sein du collecteur de carburant gazeux (54), en particulier une évolution temporelle de la pression du gaz de purge au sein du collecteur de carburant gazeux (54).

4. Procédé selon l'une quelconque parmi la revendication 1 à la revendication 3, dans lequel l'évaluation (étape 322) de l'étanchéité à l'air d'un collecteur de carburant gazeux (54) comprend :
la fourniture de données échantillons d'une évolution temporelle des données de pression ;
la comparaison des données de pression mesurées et des données échantillons ;
le fait de déterminer que la déviation des données de pression mesurées à partir des données échantillons est au-delà d'une valeur seuil ; et
l'identification du collecteur de carburant gazeux (54) comme présentant une fuite.

5. Procédé selon la revendication 4, dans lequel la valeur seuil est une valeur de pression préétablie et/ou un changement au fil du temps de la pression telle qu'un taux de décroissance et/ou la valeur seuil dépendent d'au moins l'un parmi la charge du moteur à combustion interne bicarburant (100), la pression d'air de collecteur d'admission, et les conditions de température.

6. Procédé selon l'une quelconque des revendications précédentes, dans lequel la pression d'alimentation de gaz de purge est au moins 0,2 bar, au moins 0,5 bar ou au moins 1 bar, par exemple dans la plage allant de 1 bar à 2 bar ou même jusqu'à 5 bar ou plus, au-dessus de la pression d'air de collecteur d'admission.

7. Procédé selon l'une quelconque des revendications précédentes, comprenant en outre l'activation (étape 360) d'au moins l'une des soupapes d'admission de carburant gazeux pendant le rinçage (étape 314), après le rinçage, entre des rinçages ou lorsque le système est maintenu sous pression (étape 316).

8. Procédé selon la revendication 7, dans lequel l'au moins une des soupapes d'admission de carburant gazeux (58) est ouverte et fermée au moins une fois, tel qu'une fois, deux fois ou trois fois et/ou
dans lequel au moins l'une des soupapes d'admission de carburant gazeux (58) est ouverte en ayant ou non de durée d'ouverture entre l'ouverture et la fermeture avant ou entre des mesures (étape 320) de la pression.

9. Procédé selon la revendication 7 ou la revendication 8, comprenant en outre : l'activation, par exemple séparément ou par groupe, des soupapes d'admission de carburant gazeux (58), en ajoutant de ce fait du gaz de purge à l'entrée.

10. Procédé selon l'une quelconque parmi la revendication 7 à la revendication 9, dans lequel l'évaluation (étape 322) est mise en oeuvre avant et après l'ouverture et n'importe quel changement de comportement est analysé par rapport à l'exploitabilité spécifique de la soupape d'admission de carburant gazeux.

11. Procédé selon l'une quelconque des revendications précédentes, dans lequel le procédé selon l'une quelconque des revendications précédentes est mis en oeuvre, par exemple périodiquement ou à des intervalles de temps arbitraires, alors que le moteur à combustion interne bicarburant (100) est coupé ou pendant le fonctionnement (étape 312) du moteur à combustion interne bicarburant (100) avec du carburant liquide.

12. Procédé de commande d'un processus d'initialisation (300) pour établir les conditions de démarrage pour ajouter du carburant gazeux pour commuter à un fonctionnement par carburant gazeux d'un moteur à combustion interne bicarburant (100) comprenant une pluralité de cylindres (9) et au moins une soupape d'admission de carburant gazeux pour chaque cylindre (9) de la pluralité de cylindres (9), le procédé comprenant :
la mise en oeuvre du procédé d'évaluation d'étanchéité à l'air d'un collecteur de carburant gazeux (54) d'un moteur à combustion interne bicarburant (100) selon l'une quelconque des revendications précédentes ; et
l'abandon (étape 330) du processus d'initialisation (300) dès que l'évaluation de l'évaluation d'étanchéité à l'air du collecteur de carburant gazeux (54) sur la base de la valeur de pression mesurée indique une étanchéité à l'air insuffisante.

13. Moteur à combustion interne bicarburant (100), comprenant : un système de carburant liquide (8) ;
un système de carburant gazeux (6) incluant un collecteur de carburant gazeux(54);
une pluralité de cylindres (9), reliés respectivement au collecteur de carburant gazeux (54) ;
une soupape d'admission de carburant gazeux (58) pour chaque cylindre (9) de la pluralité de cylindres (9), reliant fluidiquement le collecteur de carburant gazeux (54) avec le cylindre (9) respectif ;
au moins une soupape d'alimentation de gaz de purge (37) pour le rinçage et/ou la mise sous pression du collecteur de carburant gazeux (54) avec de l'azote en tant que gaz de purge ;
une unité de capteur (77) pour mesurer des données de pression associées au rinçage et/ou à la mise sous pression du collecteur de carburant gazeux (54) ; et
une unité de commande (76) configurée pour mettre en oeuvre le procédé selon l'une quelconque des revendications précédentes.

14. Moteur à combustion interne (100) selon la revendication 13, comprenant en outre :
au moins une soupape d'évacuation de gaz de purge (42), par exemple, située par rapport à l'au moins une soupape d'alimentation de gaz de purge (37) à une extrémité opposée du collecteur de carburant gazeux (54).

15. Moteur à combustion interne (100) selon la revendication 13 ou la revendication 14, dans lequel l'unité de capteur (77) comprend au moins un capteur de pression au niveau du côté alimentation, du côté évacuation et/ou au sein du volume observé.
